# EUROPEAN PATENT SPECIFICATION

(11) **EP 2 740 584 B1**
(45) Date of publication and mention of the grant of the patent: **27.02.2019**
(21) Application number: 11870407.1
(22) Date of filing: 10.11.2011
(51) Int. Cl.: B29C 70/16, C08F 290/06, C08G 18/67, F17C 1/06

(54) **METHOD FOR PRODUCING PRESSURE VESSEL**
VERFAHREN ZUR HERSTELLUNG EINES DRUCKBEHÄLTERS
PROCÉDÉ POUR LA PRODUCTION D'UN RÉCIPIENT À PRESSION

(30) Priority: 01.08.2011 JP 2011168304
(43) Date of publication of application: 11.06.2014
(73) Proprietor: Showa Denko K.K., Tokyo 105-8518 (JP)
(72) Inventor: KUROKI, Kunihiro, Isesaki-shi Gunma 372-0833 (JP); YAMAMOTO, Tomio, Isesaki-shi Gunma 372-0833 (JP); OOTANI, Kazuo, Isesaki-shi Gunma 372-0833 (JP)
(74) Representative: Regimbeau
(86) International application number: PCT/JP2011/075957
(87) International publication number: WO 2013/018237

(56) References cited:
- JP-A- 2001 322 182
- JP-A- 2002 161 124
- JP-A- 2002 161 124
- JP-A- 2002 273 805
- JP-A- 2002 273 805
- JP-A- 2004 034 661
- JP-A- 2005 247 879
- JP-A- 2005 324 456
- JP-A- 2006 045 406
- JP-A- 2008 164 131
- JP-A- 2008 164 131
- JP-B2- 4 490 554

## Description

### TECHNICAL FIELD

The present invention relates to methods for producing a pressure vessel, more specifically a pressure vessel for storing air, oxygen, liquid propane gas, liquid natural gas, or the like used for aerospace equipment, natural gas-powered vehicles, fire extinguishing, medical care, leisure, or the like, in particular, methods for producing fiber reinforced plastic (hereinafter, referred to as "FRP") pressure vessels.

### BACKGROUND ART

FRP pressure vessels are produced by forming an FRP layer on the outer surface of a hollow vessel (inner tank) formed of a liner material. In general, they are produced by a filament winding process, a tape winding process, or a braiding process which comprise the steps of winding a fiber material impregnated with a resin composition around the outer surface of the hollow vessel and then curing the resin composition (for example, see Patent Documents 1-3). JP 2005-324456 discloses preamble of the claim 1 and describes an impregnation process to obtain a resin-impregnated fiber material by impregnating the fiber material with a curable resin composition containing an epoxy resin, a photopolymerization initiator, a radical heat polymerization initiator and an epoxy resin curing agent.

Resins used in resin compositions for the production of FRP pressure vessels include epoxy resins, unsaturated polyester resins, vinyl ester resins, and the like. Among them, epoxy resins, excellent in physical properties such as heat resistance are frequently used. However, fiber materials cannot be thoroughly impregnated with an epoxy resin, due to the high viscosity of epoxy resins. In general, epoxy resins are cured at ambient temperature using an amine-based compound such as a modified polyamine or are thermally cured using an acid anhydride. However, use of epoxy resin is disadvantageous in that amine-based compounds have a short pot life and it takes a long time for the resin to be cured in the use of an acid anhydride, which results in an increased cost of forming FRP layers.

On the other hand, fiber materials can be thoroughly impregnated with an unsaturated polyester resin or a vinyl resin, due to the low viscosity of the resin and use of the resin is advantageous in that the cure time is short, compared with the case of using an epoxy resin because radical polymerization using a peroxide catalyst system or a photopolymerization initiator is possible. However, the use of the resin is disadvantageous in that the desired cure time cannot be obtained, even if the amount of a peroxide catalyst is increased and there is a limitation in reduction of cure time. Further, conventional methods using a peroxide catalyst system or a photopolymerization initiator have various problems regarding actual use ascribable to insufficient studies on impact resistance, strength, and the like required for pressure vessels.

### PRIOR ART REFERENCES

### PATENT DOCUMENTS

Patent Document 1: JP 4490554 B
Patent Document 2: JP 4295742 B
Patent Document 3: JP 3806209 B

### SUMMARY OF THE INVENTION

### PROBLEMS TO BE SOLVED BY THE INVENTION

The present invention is defined in claim 1 and is made for solving the problems described above. The object of the present invention is to provide a pressure vessel having an excellent balance among impact resistance, strength, and heat resistance.

### MEANS FOR SOLVING THE PROBLEMS

The inventors of this application keenly studied to solve the problems described above. As a result, they found that the cure time can be reduced and the balance among impact resistance, strength, and heat resistance can be improved by using a specific photocurable resin composition and irradiating light in the visible region and/or ultraviolet region at a predetermined irradiance to complete the present disclosure.

The disclosure comprises features further specified below.
[1] A method for producing a pressure vessel comprising impregnating a fiber material with a photocurable resin composition comprising a vinyl ester resin (A), a urethane (meth)acrylate resin (B), and a photoinitiator (C), winding the fiber material around the outer surface of a hollow vessel, and then irradiating light having a wavelength in the visible region and/or the ultraviolet region at an irradiance of 9 mW/cm² or more.
[2] The method for producing a pressure vessel according to [1], wherein the irradiated light has a wavelength of 380 to 450 nm.
[3] The method for producing a pressure vessel according to [1] or [2], wherein the hollow vessel is formed to have a cylindrical body portion with dome portions provided on both sides thereof.
[4] The method for producing a pressure vessel according to any one of [1] to [3], comprising coating the outer surface of the hollow vessel with an adhesive before winding.
[5] The method for producing a pressure vessel according to [4], wherein the adhesive is a polyolefin resin to which maleic anhydride was added.
[6] The method for producing a pressure vessel according to any one of [1] to [5], wherein the urethane (meth)acrylate resin (B) is obtained by reacting an isocyanate compound having at least two isocyanate groups in one molecule with a (meth)acrylate compound having at least one hydroxyl group in one molecule and a polyol selected from the group consisting of polyethylene glycols, polyether polyols, and polyester polyols of adipic acid and has a weight average molecular weight of 2000 to 8000.
[7] The method for producing a pressure vessel according to any one of [1] to [6], wherein the fiber material is a glass fiber.
[8] The method for producing a pressure vessel according to any one of [1] to [7], wherein the hollow vessel is formed of a metal liner material or a thermoplastic resin liner material.
[9] The method for producing a pressure vessel according to [8], wherein the hollow vessel is formed of a thermoplastic liner material and the outer surface of the hollow vessel is subjected to flame treatment.
[10] The method for producing a pressure vessel according to any one of [1] to [9], further comprising coating the surface of the formed FRP layer with a weather resistant clear coating material after irradiation.

### EFFECTS OF THE INVENTION

The present invention can provide methods for rapidly producing a pressure vessel having an excellent balance among impact resistance, strength, and heat resistance.

### MODE FOR CARRYING OUT THE INVENTION

A photocurable resin composition comprising the vinyl ester resin (A), the urethane (meth)acrylate resin (B), and the photoinitiator (C) is used in the method for producing a pressure vessel of the present invention as defined in claim 1.

The vinyl ester resin (A) used in the present invention is also called epoxy acrylate resin. In general, it is prepared by dissolving a compound having a polymerizable unsaturated bond (vinyl ester) formed by ring-opening reaction of a compound having a glycidyl group (epoxy group) with the carboxyl group of a carboxyl compound having a polymerizable unsaturated bond such as acrylic acid in a polymerizable monomer such as styrene. "Polyester Resin Handbook" (published in 1988 by The Nikkan Kogyo Shinbun, Ltd.), "Dictionary of Technical Terms of Coating Materials" (published in 1993, edited by Japan Society of Color Material), and the like describe examples of the vinyl ester resin (A).

A vinyl ester used in the vinyl ester resin (A) is not particularly limited and may be produced by a process known in the art. Examples of the vinyl ester include compounds obtained by reacting an epoxy resin with an unsaturated monobasic acid and compounds obtained by reacting a carboxy-terminated saturated or unsaturated polyester obtained using a saturated dicarboxylic acid and/or an unsaturated dicarboxylic acid and a polyalcohol with an epoxy compound having an α,β-unsaturated carboxylate group.

Examples of the epoxy resin include bisphenol A diglycidyl ether and higher molecular weight homologues thereof, novolac-type polyglycidyl ethers and higher molecular weight homologues thereof, and aliphatic glycidyl ethers such as 1,6-hexanediol diglycidyl ether. Among them, epoxy resins of bisphenol A, novolac-type polyglycidyl ethers, and brominated products thereof are preferable.

Acrylic acid, methacrylic acid, or the like are exemplified as the unsaturated monobasic acid.

Examples of the saturated dicarboxylic acid and/or the unsaturated dicarboxylic acid include adipic acid, sebacic acid, dimer acid, and the like.

Examples of the polyalcohol include ethylene glycol, propylene glycol, diethylene glycol, dipropylene glycol, 1,2-butanediol, 1,3-butanediol, 1,5-pentanediol, 1,6-hexanediol, 2-methyl-1,3-propanediol, 2,2-dimethyl-1,3-propanediol, cyclohexan-1,4-dimethanol, ethylene oxide adducts of bisphenol A, propylene oxide adducts of bisphenol A, and the like.

Examples of the epoxy compound having an α,β-unsaturated carboxylate group include glycidyl methacrylate and the like.

The polymerizable monomer used in the vinyl ester resin (A) is not particularly limited and those known in the art may be used. Examples of the polymerizable monomer include styrene-based monomers such as styrene, α-, o-, m-, and p-alkyl, nitro, cyano, amido or ester derivatives of styrene, chlorostyrene, vinyltoluene, and divinylbenzene; dienes such as butadiene, 2,3-dimethylbutadiene, isoprene, and chloroprene; (meth)acrylates such as ethyl (meth)acrylate, methyl (meth)acrylate, n-propyl (meth)acrylate, i-propyl (meth)acrylate, hexyl (meth)acrylate, 2-ethylhexyl (meth)acrylate, lauryl (meth)acrylate, dodecyl (meth)acrylate, cyclopentyl (meth)acrylate, cyclohexyl (meth)acrylate, tetrahydrofuryl (meth)acrylate, acetoacetoxyethyl (meth)acrylate, dicyclopentenyloxyethyl (meth)acrylate, phenoxyethyl (meth)acrylate, 2-hydroxyethyl (meth)acrylate, 2-hydroxypropyl (meth)acrylate, and 4-hydroxybutyl (meth)acrylate; amide (meth)acrylates such as amide (meth)acrylate and N,N-dimethylamide (meth)acrylate; vinyl compounds such as anilide (meth)acrylate; unsaturated dicarboxylic acid diesters such as diethyl citraconate; monomaleimide compounds such as N-phenyl maleimide; and N-(meth)acryloyl phthalimide. Further, a (meth)acrylate compound having at least two (meth)acryloyl groups in one molecule such as ethylene glycol di(meth)acrylate, diethylene glycol di(meth)acrylate, triethylene glycol di(meth)acrylate, polyethylene glycol di(meth)acrylate, and 1,6-hexanediol di(meth)acrylate may be used. These polymerizable monomers may be used alone or in combinations of two or more thereof. Among them, styrene is preferable in terms of workability, cost, and curing properties.

The content of the polymerizable monomer in the vinyl ester resin (A) is not particularly limited, but is preferably 20 to 80 wt%, more preferably 30 to 60 wt%. If it is less than 20 wt%, an increase in viscosity of the vinyl ester resin (A) may decrease workability. On the other hand, if it exceeds 80 wt%, a pressure vessel having desired characteristics may not be obtained.

The weight average molecular weight of the vinyl ester resin (A) is not particularly limited, but is preferably 1,000 to 6,000, more preferably 1,500 to 5,000. If the weight average molecular weight of the vinyl ester resin (A) does not fall within the range, a pressure vessel having desired characteristics may not be obtained. "Weight average molecular weight" used herein means the value obtained by performing an analysis by gel permeation chromatography (Shodex GPC-101 manufactured by Showa Denko K.K.) at ambient temperature under the following conditions, followed by calculation to give a polystyrene equivalent weight average molecular weight. (The "weight average molecular weight" of each component below is a value determined and calculated by the same method under the same conditions.)
Column: two sets of LF-804 manufactured by Showa Denko K.K.
Column temperature: 40°C
Sample: a solution comprising 0.4 wt% of tetrahydrofuran based on the copolymer
Flow rate: 1mL/min
Eluent: tetrahydrofuran

The urethane (meth)acrylate resin (B) used in the present invention is prepared by dissolving an urethane (meth)acrylate in a polymerizable monomer such as styrene. The urethane (meth)acrylate is not particularly limited and those known in the art may be used. Among them, an urethane (meth)acrylate obtained by reacting an isocyanate compound having at least two isocyanate groups in one molecule, a (meth)acrylate compound having at least one hydroxyl group in one molecule, and a polyol selected from the group consisting of polyethylene glycols, polyether polyols, and polyester polyols of adipic acid is preferable in terms of characteristics of FRP layers formed.

Examples of the isocyanate compound having at least two isocyanate groups in one molecule include diphenylmethane diisocyanate, 2,4-trilene diisocyanate and isomers thereof, hexamethylene diisocyanate, isophorone diisocyanate, xylylene diisocyanate, triphenylmethane triisocyanate, and the like. These isocyanate compounds may be used alone or in combinations of two or more thereof. Among these isocyanate compounds, diphenylmethane diisocyanate is preferable because it has excellent reactivity and is less harmful to the body.

The amount of the isocyanate compound(s) used is preferably 5 to 90 parts by weight, more preferably 10 to 50 parts by weight, based on 100 parts by the total weight of components of the urethane (meth)acrylate. If the amount of the isocyanate compound(s) used is less than 5 parts by weight, desired characteristics (in particular, adhesion strength of the FRP layer) may not be obtained. On the other hand, if it exceeds 90 parts by weight, desired characteristics (in particular, flexibility of the FRP layer) may not be obtained.

Examples of the (meth)acrylate compounds having at least one hydroxyl group in one molecule include 2-hyeroxyethyl (meth)acrylate, 2-hydroxypropyl (meth)acrylate, 3-hydroxybutyl (meth)acrylate, polyethylene glycol mono(meth)acrylate, polypropylene glycol mono(meth)acrylate, di(meth)acrylate of tris(hydroxyethyl) isocyanuric acid, pentaerythritol tri(meth)acrylate, and the like. These (meth)acrylate compounds may be used alone or in combinations of two or more thereof. Among these (meth)acrylate compounds, 2-hydroxyethyl (meth)acrylate and 2-hydroxypropyl (meth)acrylate are preferable in terms of their cost and safety.

The amount of the (meth)acrylate compound(s) used is preferably 5 to 90 parts by weight, more preferably 10 to 50 parts by weight, based on 100 parts by the total weight of the components of the urethane (meth) acrylate. If the amount of the (meth)acrylate compound(s) used is less than 5 parts by weight, desired characteristics (in particular, strength of the FRP layer) may not be obtained. On the other hand, if it exceeds 90 parts by weight, desired characteristics (in particular, flexibility of the FRP layer) may not be obtained.

The polyethylene glycol is not particularly limited, but preferably has a weight average molecular weight of 200 to 2,000, more preferably 400 to 1,500. If the weight average molecular weight is less than 200, desired characteristics (in particular, the viscosity of the resin composition) may not be obtained. On the other hand, if it exceeds 2,000, the compatibility of the urethane (meth)acrylate resin (B) with the vinyl ester resin (A) is reduced and desired characteristics (in particular, adhesion strength of the FRP layer) may not be obtained.

When the polyethylene glycol is used, the amount thereof is preferably 0.1 to 90 parts by weight, more preferably 5 to 50 parts by weight, based on 100 parts by the total weight of the components of the urethane (meth)acrylate. If the amount is less than 0.1 part by weight, the compatibility of the urethane (meth)acrylate resin (B) with the vinyl ester resin (A) may be reduced. On the other hand, if it exceeds 90 parts by weight, desired characteristics (such as water resistance of the FRP layer) may not be obtained.

The polyether polyol is not particularly limited, but preferably has a weight average molecular weight of 500 to 1,500, more preferably 800 to 1,200. If the weight average molecular weight is less than 500, desired characteristics (in particular, the viscosity of the resin composition) may not be obtained. On the other hand, if it exceeds 1,500, the compatibility of the urethane (meth)acrylate resin (B) with the vinyl ester resin (A) is reduced and desired characteristics (in particular, adhesion strength of the FRP layer) may not be obtained.

When the polyether polyol is used, the amount thereof used is preferably 5 to 90 parts by weight, more preferably 20 to 60 parts by weight, based on 100 parts by the total weight of the components of the urethane (meth)acrylate. If the amount is less than 5 parts by weight, desired characteristics (in particular, flexibility of the FRP layer) may not be obtained. On the other hand, if it exceeds 90 parts by weight, the compatibility of the urethane (meth)acrylate resin (B) with the vinyl ester resin (A) is reduced and desired characteristics (in particular, adhesion strength of the FRP layer) may not be obtained.

The polyester polyol of adipic acid is not particularly limited, but preferably has a weight average molecular weight of 600 to 3,000, more preferably 800 to 2,500. If the weight average molecular weight is less than 600, desired characteristics (in particular, the viscosity of the resin composition) may not be obtained. On the other hand, if it exceeds 3,000, the compatibility of the urethane (meth)acrylate resin (B) with the vinyl ester resin (A) is reduced and desired characteristics (in particular, adhesion strength of the FRP layer) may not be obtained.

When the polyester polyol of adipic acid is used, the amount thereof used is preferably 0.1 to 90 parts by weight, more preferably 5 to 50 parts by weight, based on 100 parts by the total weight of the components of the urethane (meth)acrylate. If the amount is less than 0.1 part by weight, the compatibility of the urethane (meth)acrylate resin (B) with the vinyl ester resin (A) may be reduced and desired characteristics (in particular, adhesion strength of the FRP layer) may not be obtained. On the other hand, if it exceeds 90 parts by weight, desired characteristics (in particular, water resistance of the FRP layer) may not be obtained.

The method for producing the urethane (meth)acrylate is not particularly limited. The urethane (meth)acrylate may be produced by a process known in the art using the components above. For example, the urethane (meth)acrylate can be obtained by reacting an isocyanate compound having at least two isocyanate groups in one molecule with a polyethylene glycol under stirring to form an isocyanate terminated prepolymer and then reacting the prepolymer with a (meth)acrylate compound having at least one hydroxyl group in one molecule charged. In the reaction, a catalyst such as dibutyltin dilaurate, a tertiary amine, or phosphonic acid may be added. When a catalyst is added, the amount thereof is preferably 0.0001 to 1 part by weight, more preferably from 0.001 to 0.5 part by weight, based on 100 parts by the total weight of the components of the urethane (meth)acrylate. If the amount of the catalyst added is less than 0.0001, the reaction may not proceed thoroughly. On the other hand, if it exceeds 1 part by weight, it may be difficult to control the reaction.

The reaction temperature and the reaction time may be optionally selected in the reaction, but the reaction temperature is preferably 40 to 120°C and the reaction time is preferably 1 to 24 hours. If the reaction temperature is lower than 40°C or the reaction time is less than one hour, the reaction may not proceed thoroughly and the urethane (meth)acrylate having desired characteristics may not be obtained. On the other hand, if the reaction temperature exceeds 120°C or the reaction time exceeds 24 hours, problems of cost and reaction control may occur.

The polymerizable monomer used in the urethane (meth)acrylate resin (B) is not particularly limited and those known in the art may be used. Examples of the polymerizable monomer include those used for dissolving the vinyl ester resin (A).

The content of the polymerizable monomer in the urethane (meth)acrylate resin (B) is not particularly limited, but is preferably 20 to 80 wt%, more preferably 30 to 60 wt%. If the content is less than 20 wt%, an increase in the viscosity of the urethane (meth)acrylate resin (B) may decrease workability. On the other hand, if it exceeds 80 wt%, desired characteristics (in particular, adhesion strength of the FRP layer) required for pressure vessels may not be obtained.

The weight average molecular weight of the urethane (meth)acrylate resin (B) is not particularly limited, but is preferably 2,000 to 8,000, more preferably 2,500 to 7,500, the most preferably 3,000 to 7,000. If the weight average molecular weight falls within the range, the compatibility with the vinyl ester resin (A) is excellent, whereby the vinyl ester (A) is not separated from the urethane (meth)acrylate resin (B) and excellent adhesion strength can be obtained. If it does not fall within the range, desired characteristics (in particular, adhesion strength) may not be obtained.

The mixing ratio by weight of the vinyl ester resin (A) to the urethane (meth)acrylate resin (B) is 90:10 to 10:90, more preferably 70:30 to 30:70. If the ratio of the vinyl ester resin (A) exceeds the range, desired characteristics (in particular, toughness of the FRP layer) may not be obtained. On the other hand, if the ratio of the urethane (meth)acrylate resin (B) exceeds the range, desired characteristics (in particular, strength of the FRP layer) may not be obtained.

The photoinitiator (C) used in the present invention is not particularly limited as long as it has photosensitivity in the visible region and/or the ultraviolet region and those known in the art may be used. In general, such kinds of photoinitiators (C) are also called ultraviolet polymerization initiators or visible light polymerization initiators.

The amount of the photoinitiator (C) used is preferably 0.1 to 10.0 parts by weight, more preferably 0.2 to 5.0 parts by weight, based on 100 parts by total weight of the vinyl ester resin (A) and the urethane (meth)acrylate resin (B). If the amount is less than 0.1 part by weight, photopolymerization may not proceed thoroughly. On the other hand, if it is less than 10.0 parts by weight, desired characteristics (in particular, strength of the FRP layer) may not be obtained.

Examples of the ultraviolet polymerization initiator include acetophenone-, benzylketal-, and (bis)acrylphosphine oxide-based ultraviolet polymerization initiators. These ultraviolet polymerization initiators may be used alone or in combinations of two or more thereof. As the light transmission through FRPs of ultraviolet light having a short wavelength is low, use of an ultraviolet polymerization initiator such as a (bis)acylphosphine oxide-based one having photosensitivity at relatively long wavelengths, preferably in the visible region of 380 nm or longer is preferable.

Examples of the ultraviolet polymerization inhibitor include a product with the trade name of Irgacure 1700 (manufactured by Ciba Speciality Chemicals K.K.), a mixture of 75 wt% of 2-hydroxy-2-methyl-1-phenylpropan-1-one (trade name: Darocur1173, manufactured by Ciba Speciality Chemicals K.K.) and 25 wt% of bis(2,6-dimethoxybenzoyl)-2,4,4-trimethylpentyl phosphine oxide (manufactured by Ciba Speciality Chemicals K.K.); a product with the trade name of Irgacure 1800 (manufactured by Ciba Speciality Chemicals K.K.), a mixture of 75 wt% of 1-hydroxy-cyclohexyl-phenyl-ketone (trade name: Irgacure 184, manufactured by Ciba Speciality Chemicals K.K.) and 25 wt% of bis(2,6-dimethoxybenzoyl)-2,4,4-trimethylpentyl phosphine oxide (manufactured by Ciba Speciality Chemicals K.K.), a product with the trade name of Irgacure 1850 (manufactured by Ciba Speciality Chemicals K.K.), a 50%/50% mixture thereof; bis(2,4,6-trimethylbenzoyl)-phenylphosphine oxide (trade name: Irgacure 819, manufactured by Ciba Speciality Chemicals K.K.); 2,4,6-trimethylbenzoyl diphenylphosphine oxide (trade name: Lucirin TPO, manufactured by BASF K.K.); a product with the trade name of Darocur4265, a mixture of 50 wt% of 2-hydroxy-2-methyl-1-phenylpropan-1-one (trade name: Darocur1173, manufactured by Ciba Speciality Chemicals K.K.) and 50 wt% of 2,4,6-trimethylbenzoyl-diphenylphosphine oxide (trade name: Lucirin TPO, manufactured by BASF K.K.); and the like.

Examples of the visible light polymerization initiator include single initiator systems such as camphor quinine, benzyl, trimethylbenzoyl diphenylphosphine oxide, methylthio xanthone, and biscyclopentadienyl titanium-di(pentafluorophenyl) disclosed in "Surface" 27 (7), 548 (1989), written by Yamaoka *et al.* and "A collection of summary of No. 3 polymeric materials forum" in 1BP18 (1994), written by Sato *et al.*; composite initiator systems such as organic peroxide catalyst/pigment, diphenyl iodonium salt/pigment, biimidazole/keto-compound, hexaaryl biimidazole compound/hydrogen donor compound, mercaptobenzothiazole/thiopyrylium salt, and metal arene/cyanine pigment systems, a hexaaryl biimidazole/radical generator system disclosed in JP 45-37377 B; and the like. They may be used alone or in combinations of two or more thereof.

Hexaaryl biimidazole having general the formula (1) below is preferable.

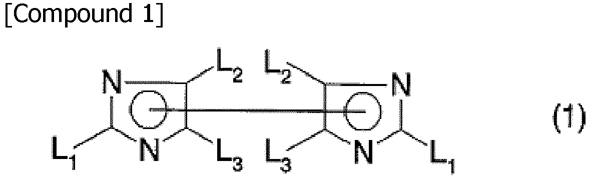

In formula (1) above, L₁, L₂, and L₃ each independently represent an aryl group or substituted aryl group. Examples of the aryl group include phenyl groups, naphthyl groups, and the like.

Specific examples of hexaaryl biimidazole include bis(2,4,5-triphenyl)imidazole, bis(2-o-chlorophenyl-4,5-diphenyl)imidazole, bis(2-o,p-dichlorophenyl-4,5-diphenyl)imidazole, bis(2-o-bromophenyl-4,5-diphenyl)imidazole, and the like. Among them, bis(2-o-bromophenyl-4,5-diphenyl)imidazole is preferable. Hexaaryl biimidazole described in JP 41-3545 B may also be used.

Additives known in the technical field of this application may be added to the photocurable resin composition in an amount within a range that does not impair the effects of the present disclosure. Examples of additives known in the art include ultraviolet absorbers, antioxidants, dyes, pigments, thixotropic agents, flame retardants, low-profile additives, inorganic and organic fillers, diluents, surface preparation agents, humectants, accelerators, and the like. The mixing ratio of these additives is not particularly limited as long as it is within a range that does not impair the effects of the present disclosure.

The type of ultraviolet absorber is not particularly limited and those known in the art may be used. Examples of the ultraviolet absorber include benzophenone-based, salicylate-based, benzotriazole-based, benzoate-based, cyanoacrylate-based, and hindered amine-based absorbers and the like. They may be used alone or in combinations of two or more thereof.

The type of diluent is not particularly limited and those known in the art may be used. The viscosity can be adjusted to a suitable value by adding diluent(s).

The types of surface preparation agent and humectant are not particularly limited and those known in the art may be used. Examples thereof include silane coupling agents and the like. Adhesion to the fiber material can be increased by adding them.

The type of accelerator is not particularly limited and those known in the art may be used. Examples thereof include organomanganese and the like. Drying characteristics and characteristics of cured products can be improved by adding an accelerator. The same effects can be obtained using an additive such as paraffin wax.

A photocurable resin composition comprising the components above can be produced by mixing the components. In this production method, the mixing process is not particularly limited and processes known in the art may be used.

The mixing ratio by weight of the vinyl ester resin (A), the urethane (meth)acrylate resin (B), and the photoinitiator (C), i.e., (A):(B):(C) is preferably 90-10:10-90:0.1-10.0, more preferably 70-30:30-70:0.2-5.0, provided that that total weight of the vinyl ester resin (A), the urethane (meth)acrylate resin (B), and the photoinitiator (C) is 100.

The type of fiber material impregnated with the photocurable resin composition is not particularly limited and may be selected from various inorganic and/or organic fibers. Examples of fiber materials include glass fibers, carbon fibers, aramide fibers, polyethylene terephthalate fibers, high-density polyethylene fibers, nylon fibers, vinylon fibers, and the like. Among them, glass fiber is preferable in terms of heat residence. These fiber materials may be used alone or in combinations of two or more thereof. The form of the fiber material is not particularly limited and those in roving, tape, or mat form may be used.

The amount of fiber material(s) used is preferably 5 to 400 parts by weight, more preferably 50 to 300 parts by weight, based on 100 parts by weight of the photocurable resin composition. If the amount is less than 5 parts by weight, the desired level of strength cannot be obtained. On the other hand, if it exceeds 400 parts by weight, impact resistance may be reduced.

The fiber material impregnated with the photocurable resin composition is wound around the outer surface of the hollow vessel. The winding process is not particularly limited and those known in the art may be used. Examples thereof include hoop winding, helical winding, and the like.

The type of hollow vessel is not particularly limited and those having various forms known in the art may be used. Among them, hollow vessels having a cylindrical body portion having dome portions provided on both sides thereof are preferable. Hollow vessels formed of a metal liner material such as iron, aluminum, titanium, or an alloy thereof or a thermoplastic resin liner material such as polyethylene, high-density polyethylene, polypropylene, polyurethane, a polyamide resin, a polybutylene terephthalate resin, or a composite material of these resins may be used.

The hollow vessel may be produced by processes known in the art. For example, a hollow vessel formed of a metal liner material can be produced by a method such as molding, metal-casting, melting between the body portion and dome portions, deep-drawing followed by spinning to form dome portions, or the like. Hollow vessels formed of a thermoplastic resin liner material can be produced by blow molding, rotational molding, thermal fusion molding, injection molding, or the like.

Hollow vessels that have been formed of a liner material may be subjected to winding. However, hollow vessels formed of a metal liner material may be subjected to a surface treatment such as sand blasting or chemical treatment before winding, at a level that does not impair the effects of the present disclosure. Surface treatment can increase the adhesion strength of the fiber material impregnated with the photocurable resin composition to the hollow vessel.

For hollow vessels formed of a thermoplastic resin liner material, an adhesive may be coated on the outer surface of the hollow vessel before winding or surface treatment known in the art such as UV treatment, corona discharge process, flame treatment, chemical treatment, or the like may be used alone or in combination. Coating with an adhesive and various kinds of treatments can increase the adhesion strength of the fiber material impregnated with the photocurable resin composition to the hollow vessel.

The type of adhesive capable of increasing the adhesion strength of the fiber material impregnated with the photocurable resin composition to the thermoplastic resin liner material is not particularly limited and those known in the art may be used. Examples of the adhesive include epoxy-based adhesives, urethane-based adhesives, acrylate-based adhesives, and the like. A polyolefin resin to which maleic anhydride was added may be used as an adhesive. Examples of epoxy-based adhesives include Karenz PE-1 (a thiol manufactured by Showa Denko K.K.); examples of urethane-based adhesives include UM-50P (one component moisture-curing urethane-based adhesive manufactured by Mitsui Chemicals, Inc.); example of acrylate-based adhesives include Scotch-Weld DP-8005 and DP-8010 (two-component acrylate adhesives manufactured by Sumitomo 3M Limited); examples of special adhesives include Colnova MPO (a maleic anhydride modified noncrystalline polypropylene resin-based special resin manufactured by Nihon Cima Co., Ltd.) and Arrow Base SE-1200 (manufactured by Unitika LTD.).

Light having a wavelength in the visible region and/or the ultraviolet region, preferably 380 to 450 nm is irradiated after winding. "Visible region" used herein means a wavelength range of 380 nm to 780 nm and "ultraviolet region" used herein means a wavelength range of 280 nm or longer and shorter than 380 nm.

The light source used for irradiation is not particularly limited as long as it can irradiate a light having a wavelength in the visible region and/or the ultraviolet region. Examples of the light source include high-pressure mercury lamps, metal halide lamps, xenon lamps, halogen lamps, ultraviolet LEDs, visible light LEDs, solar light, and the like. They may be used alone or in combinations of two or more thereof. The light source may be provided with a coated filter or the like capable of blocking a light having a specific wavelength.

The irradiance of the irradiated light is 20 to 50 mW/cm². Irradiation at an irradiance within the range can shorten the cure time and improve the impact resistance and strength of the pressure vessel. If the irradiance is less than 9 mW/cm², the cure time becomes longer and impact resistance and strength are reduced. "Irradiance" used herein means an irradiance in the irradiated light wavelength region measured by an illuminometer "IL-1400A" manufactured by International Light Corporation, an irradiance of 380 to 450 nm having a sensitivity peak at 405 nm. Irradiance can also be determined by an illuminometer manufactured by an other company, but the determined irradiance value may vary with the kind of illuminometer. Assuming that the irradiance of light determined by "IL-1400A" is 20 mW/cm², that determined by the unimeter "UIT-201/photoreceptor UVD-405PD/measurement range M" manufactured by Ushio Inc. is 9.4 mW/cm² and that determined by the UV radiometer "UVR-2/photoreceptor UD-40" manufactured by Topcon Techno House Corporation is 32.0 mW/cm². Accordingly, when irradiance is measured by an illuminometer manufactured by an other company, the value of irradiance obtained should be corrected, based on a correlation to the value measured by "IL-1400A".

The irradiation time is not particularly limited and can be appropriately selected, depending on various factors such as the effective wavelength of the light source, output of the light source, the distance between the light source and the fiber material impregnated with the photocurable resin composition, and the like because they affect the irradiation time. In the same manner, the cumulative light quantity is not particularly limited and can be appropriately selected, depending on various factors.

The outer surface of the pressure vessel may be coated with a weather resistant clear coating material so as to prevent ultraviolet degradation and fine scratches on the surface. The type of weather resistant clear coating material is not particularly limited. Those known in the art such as acrylate-based coating materials and urethane-based coating materials are exemplified. These coating materials may be solvent-based or water-based ones. Addition of an ultraviolet absorber in an amount that does not reduce the clarity of the coating material is more effective for the prevention of ultraviolet degradation.

As the weather resistant clear coating material, Vinylol OLY-5317 (an emulsion type product manufactured by Showa Denko K.K.) is exemplified. The type of ultraviolet absorber is not particularly limited. Those known in the art such as benzophenone-based absorbers, salicylate-based absorbers, benzotriazole-based absorbers, benzoate-based absorbers, cyanoacrylate-based absorbers, and hindered amine-based absorbers may be used. They may be used alone or in combinations of two or more thereof.

Pressure vessels produced as above are excellent in production efficiency resulting from reduced cure time and are excellent in the balance among impact resistance, strength, and heat resistance. Therefore, they can be used for storing air, oxygen, liquid propane gas, liquid natural gas, or the like used for aerospace equipment, natural gas-powered vehicles, fire extinguishing, medical care, leisure, or the like. They can be also used as boilers and hot water storage tanks.

### EXAMPLES

The present invention will be further explained in more detail with reference to examples but is not limited thereto since the invention is defined by claim 1. "Part(s)" and "%" in examples and comparative examples mean those by weight.

### (Synthesis of the vinyl ester resin)

1890 g of Epikote 828 (an epoxy resin having an epoxy equivalent of 189, manufactured by Yuka Shell K.K.), 285 g of bisphenol A, and 10.8 g of triethylamine were placed in a reactor equipped with a stirrer, a reflux condenser, a gas inlet tube, and thermometer and were reacted under a nitrogen atmosphere at 150°C for two hours. After completion of the reaction, the temperature was lowered to 90°C, 645 g of methacrylic acid, 9 g of tetradecyl dimethyl benzyl ammonium chloride, 0.9 g of hydroquinone, and 1000 g of styrene were added to the reaction product, and the mixture was further reacted at 90°C for 20 hours in the presence of air blown into the reactor. When the acid value became 10 mgKOH/g, the reaction was stopped to obtain a vinyl ester. Next, 1890 g of styrene was added to the vinyl ester to obtain a vinyl ester resin of bisphenol A (VE-1) having a viscosity at 25°C of 0.1 Pa.s and a solid content of 50%. The weight average molecular weight of the vinyl ester resin (VE-1) was 1,822. In the determination of weight average molecular weight, analysis by gel permeation chromatography (Shodex GPC-101 manufactured by Showa Denko K.K.) at ambient temperature under the following conditions was conducted and a polystyrene equivalent weight average molecular weight was calculated. Weight average molecular weights of the following synthesis examples were determined using the same apparatus under the same conditions. Column: two sets of LF-804 manufactured by Showa Denko K.K.
Column temperature: 40°C
Sample: a solution comprising 0.4 wt% of tetrahydrofuran based on the copolymer
Flow rate: 1mL/min
Eluent: tetrahydrofuran

### (Synthesis of the urethane (meth)acrylate resin)

500 g of diphenylmethane diisocyanate, 700 g of Actocol P-22 (a polyether polyol having a weight average molecular weight of 1,000, manufactured by Mitsui Takeda Chemicals Inc.), 180 g of Toho Polyethylene Glycol #600 (a polyethylene glycol having a weight average molecular weight of 600, manufactured by Toho Chemical Industries, Co., Ltd.), and 0.2 g of dibutyltin dilaurate were placed in a 3L four-neck flask equipped with a stirrer, a reflux condenser, a gas inlet tube, and a thermometer and were reacted by stirring at 60°C for four hours. Next, 260 g of 2-hydroxyethyl methacrylate was dropped into the reaction product over two hours, while the mixture was stirred. After completion of dropping, the mixture was reacted by stirring for five hours to obtain an urethane methacrylate. 702 g of a styrene monomer was added to the urethane methacrylate above to obtain an urethane methacrylate resin (U-1). The weight average molecular weight of the urethane methacrylate resin (U-1) was 6,776.

### (Examples 1-3 and Comparative Examples 1-3)

The vinyl ester resin (VE-1), the urethane methacrylate resin (U-1), and a polymerization initiator were mixed using components at the formulation ratio shown in Table 1 to prepare resin compositions. A photo-polymerization initiator was used as the polymerization initiator to prepare the photocurable resin compositions in Examples 1 to 3 and Comparative Examples 2 and 3. A thermal polymerization initiator was used as the polymerization initiator to prepare a thermosetting resin composition in Comparative Example 1.

Next, impact tests were conducted on samples having a thickness of 4 mm prepared by curing the resin composition obtained in the examples and comparative examples above under the curing conditions shown in Table 1, which were Izot impact tests using notchless samples in accordance with JIS K 7110 (1999). A 600 W metal halide lamp was used as a light source for curing photocurable resin compositions and a light having a wavelength of 380 to 450 nm was irradiated. The irradiance and cumulative light quantity were measured in the wavelength range of 380 to 450 nm by an IL-1400A manufactured by International Light Corporation. The irradiance was adjusted by changing the irradiation distance. The cumulative light quantity was calculated by the formula, irradiance x irradiation time (seconds). Table 1 shows the results thereof.

**[Table 1]**

| | Example 1 | Example 2 | Example 3 | Comp. Example 1 | Comp. Example 2 | Comp. Example 3 |
|---|---|---|---|---|---|---|
| VE-1 (parts by weight) | 50 | 70 | 70 | 50 | 50 | 50 |
| U-1 (parts by weight) | 50 | 30 | 30 | 50 | 50 | 50 |
| Polymerization initiator (parts by weight/kind) | 2.0/C-1 | 2.0/C-1 | 2.0/C-1 | 1.5/C-2 | 2.0/C-1 | 2.0/C-1 |
| | | | | 0.1/C-3 | | |
| Curing means | Light | Light | Light | Peroxide/ Heat | Light | Light |
| Curing conditions | 20 mW/cm² Irradiance | 20 mW/cm² Irradiance | 50 mW/cm² Irradiance | 80°C Cure temperature | 5 mW/cm² Irradiance | 5 mW/cm² Irradiance |
| Cure time (minutes) | 15 | 15 | 6 | 40 | 60 | 120 |
| Cumulative light quantity (mJ/cm²) | 18,000 | 18,000 | 18,000 | - | 18,000 | 36,000 |
| Impact value (kJ/m²) | 58 | 51 | 57 | 39 | 32 | 33 |
| <Note> | | | | | | |
| C-1: Irgacure 819 | | | | | | |
| C-2: Percumyl H | | | | | | |
| C-3: 6% manganese naphthenate | | | | | | |

As is clear from the comparison of Examples 1 to 3 with Comparative Example 1, Table 1 indicates that the cure times of the photocurable resin compositions were shorter than that of the thermosetting resin composition and the impact values of cured products of the photocurable compositions were high. In addition, comparison of Examples 1 to 3 with Comparative Examples 2 and 3 indicates that when the irradiance was extremely low as in Comparative Examples 2 and 3, the impact value of the cured product whose cumulative light quantity was the same as or two times that of Examples 1 to 3 was small and the cure time therefor was long, while the cure time could be shortened and a cured product having a high impact value could be obtained by increasing the irradiance, as in Examples 1 to 3.

### (Examples 4-7 and Comparative Examples 4-5)

The vinyl ester resin (VE-1), the urethane methacrylate resin (U-1), and a polymerization initiator were mixed using components at the formulation ratio shown in Table 2 to prepare resin compositions. A photopolymerization initiator was used to prepare the photocurable resin compositions in Examples 4 to 7 and Comparative Example 5. A thermal polymerization initiator was used to prepare the thermosetting resin composition in Comparative Example 4.

Next, a high-density polyethylene hollow vessel formed to have a cylindrical body portion having dome portions provided on both sides thereof (having a length of the body portion of 593 mm, an outer diameter of the body portion of 380 mm, an entire length of the vessel including dome portions of 830 mm, and a thickness of 4mm) was passed through flame generated from a propane gas fuel, having calories of 5857 KJ, at a temperature of 1300°C over 10 seconds to conduct a flame treatment of the entire surface of the hollow vessel.

Next, a T-glass roving (RST-220PA manufactured by Nisshinbo Inc.) impregnated with each of the resin compositions above was wound around the flame-treated high-density polyethylene hollow vessel by filament winding, i.e., first, by helical winding to have a film thickness of 0.98 mm, followed by hoop winding to have a film thickness of 0.6 mm. The amount of the T-glass roving used to prepare the T-glass roving impregnated with each resin was 226 parts by weight based on 100 parts by weight of the resin composition. After completion of winding, the roving was cured by the predetermined means described in Table 2, while the vessel was being rotated to obtain a pressure vessel. A 600 W metal halide lamp was used and a light having a wavelength of 380 to 450 nm was irradiated in curing the photocurable resin composition. The irradiance and cumulative light quantity were measured in the wavelength range of 380 to 450 nm by an IL-1400A manufactured by International Light Corporation. The cumulative light quantity was calculated by the formula, irradiance x irradiation time (seconds). Table 2 shows the results thereof.

In Examples 6 and 7, the surface of the flame-treated high-density polyethylene hollow vessel was coated with an adhesive in an amount of 50 g/m² before winding the T-glass roving impregnated with the resin composition around the flame-treated high-density polyethylene hollow vessel and was cured. Table 2 shows the adhesive and curing conditions used.

Each of the pressure vessels produced as above were subjected to the following tests.

### (Bursting test)

In the bursting test, a bursting tester was used and water was injected to increase the inner pressure, while the strain of the pressure vessel was observed by a strain gauge attached to the surface of the pressure vessel to measure the value of the pressure at which the pressure vessel was destroyed.

### (Ambient temperature pressure cycling test)

The cycle of changing hydraulic pressure applied to the pressure vessel from the highest filling pressure (1.8 MPa) to 0.18 MPa was repeated ten times per minute and the number of cycles repeated until the pressure vessel was destroyed was counted.

### (Adhesion test)

The pressure vessel was cut into quarters to visually observe the adhesion state between the high-density polyethylene hollow vessel and the FRP layer (the presence of peeling). In addition, the adhesion strength of the dome portion of the pressure vessel was determined by an adhesion testing device (pull-off adhesion test). An adhesion jig having a diameter of 20 mm was bonded to the surface of the FRP layer using an epoxy-based adhesive and the circumference of the adhesion jig was cut deeply enough to cut the high-density polyethylene hollow vessel portion by a hole saw to determine the adhesion strength. An adhesion tester manufactured by Elcometer Inc. was used as the adhesion testing device. Table 2 shows the results of the tests above.

**[Table 2]**

| | Example 4 | Example 5 | Example 6 | Example 7 | Comp. Example 4 | Comp. Example 5 |
|---|---|---|---|---|---|---|
| Adhesive (Kind/ Curing conditions) | - | - | Colnova 80°C, 30 min | UM-50P 23°C, 30 min | - | - |
| VE-1 (parts by weight) | 50 | 70 | 50 | 50 | 50 | 50 |
| U-1 (parts by weight) | 50 | 30 | 50 | 50 | 50 | 50 |
| Polymerization initiator (Parts by weight/Kind) | 2.0/C-1 | 2.0/C-1 | 2.0/C-1 | 2.0/C-1 | 1.5/C-2 | 2.0/C-1 |
| | | | | | 0.1/C-3 | |
| Curing means | Light | Light | Light | Light | Peroxide/ Heat | Light |
| Curing conditions | 20 mW/cm² Irradiance | 20 mW/cm² Irradiance | 20 mW/cm² Irradiance | 20 mW/cm² Irradiance | 80°C Cure temperature | 5 mW/cm² Irradiance |
| Cure time (minutes) | 30 | 30 | 30 | 30 | 40 | 120 |
| Cumulative light quantity (mJ/cm²) | 36,000 | 36,000 | 36,000 | 36,000 | - | 36,000 |
| Bursting test (MPa) | 8.0 | 8.1 | 8.3 | 8.2 | 8.0 | 6.5 |
| Ambient temp cycling test | 80,000< | 80,000< | 80,000< | 80,000< | 52012 | 42113 |
| Peeling observed | None | None | None | None | None | None |
| Adhesion strength (N/mm²) | 2.6 | 2.7 | 3.1 | 4.0 | 2.4 | 2.2 |
| <Note> | | | | | | |
| Colnova: Colnova MPO manufactured by Nihon Cima Co., Ltd. | | | | | | |
| UM-50P: one component moisture-curing urethane-based adhesive manufactured by Mitsui Chemicals, Inc. | | | | | | |
| C-1: Irgacure 819 | | | | | | |
| C-2: Percumyl H | | | | | | |
| C-3: 6% manganese naphthenate | | | | | | |

As indicated by the results shown in Table 2, the pressure vessels of Examples 4 to 7 had a short cure time and were excellent in each of the bursting test, ambient temperature cycling test, and adhesion test. Examples 6 and 7 prepared by coating the surface of the hollow vessel with an adhesive before winding had excellent adhesion properties.

On the other hand, the results of the ambient cycling test of the pressure vessel of Comparative Example 4 produced using a thermosetting resin composition were not satisfactory. The pressure vessel of Comparative Example 5 produced under the curing condition at an extremely low irradiance had a long cure time and the results of the ambient cycling test and strength were not satisfactory.

As is clear from the results above, the present invention can provide methods for rapidly producing a pressure vessel excellent in balance among impact resistance, strength, and heat resistance.

## Claims

1. A method for producing a pressure vessel comprising impregnating a fiber material with a photocurable resin composition comprising a vinyl ester resin (A), a urethane (meth)acrylate resin (B), and a photoinitiator (C), and winding the fiber material around the outer surface of a hollow vessel, **characterized in that** the method comprises after winding irradiating light having a wavelength of 380 to 450 nm having a sensitivity peak at 405 nm at an irradiance of 20 to 50 mW/cm², wherein irradiance means an irradiance in the irradiated light wavelength region measured by an illuminometer IL-1400A manufactured by International Light Corporation.

2. The method for producing a pressure vessel according to claim 1, wherein the hollow vessel is formed to have a cylindrical body portion having dome portions provided on both sides thereof.

3. The method for producing a pressure vessel according to any one of claims 1 to 2, comprising coating the outer surface of the hollow vessel with an adhesive before winding.

4. The method for producing a pressure vessel according to claim 3, wherein the adhesive is a polyolefin resin to which maleic anhydride was added.

5. The method for producing a pressure vessel according to any one of claims 1 to 4, wherein the urethane (meth)acrylate resin (B) is obtained by reacting an isocyanate compound having at least two isocyanate groups in one molecule with a (meth)acrylate compound having at least one hydroxyl group in one molecule and a polyol selected from the group consisting of polyethylene glycols, polyether polyols, and polyester polyols of adipic acid and has a weight average molecular weight of 2000 to 8000.

6. The method for producing a pressure vessel according to any one of claims 1 to 5, wherein the fiber material is a glass fiber.

7. The method for producing a pressure vessel according to any one of claims 1 to 6, wherein the hollow vessel is formed of a metal liner material or a thermoplastic resin liner material.

8. The method for producing a pressure vessel according to claim 7, wherein the hollow vessel is formed of a thermoplastic liner material and the outer surface of the hollow vessel is subjected to flame treatment.

9. The method for producing a pressure vessel according to any one of claims 1 to 8, further comprising coating the surface of the formed FRP layer with a weather resistant clear coating material after irradiation.

## Patentansprüche

1. Verfahren zum Herstellen eines Druckbehälters, der das Imprägnieren eines Fasermaterials mit einer photohärtbaren Harzzusammensetzung umfasst, die ein Vinylesterharz (A), ein Urethan(meth)acrylat-Harz (B) und einen Photoinitiator (C) enthält, und das Wickeln des Fasermaterials um die äußere Oberfläche eines hohlen Behälters, **dadurch gekennzeichnet, dass** das Verfahren nach dem Wickeln das Bestrahlen mit Licht umfasst, das eine Wellenlänge von 380 bis 450 nm hat, das einen Empfindlichkeitspeak bei 405 nm bei einer Bestrahlungsstärke von 20 bis 50 mW/cm² hat, wobei Bestrahlung eine Bestrahlung im bestrahlten Lichtwellenlängenbereich bedeutet, gemessen mit einem Illuminometer IL-1400A, hergestellt von der International Light Corporation.

2. Verfahren zum Herstellen eines Druckbehälters nach Anspruch 1, wobei der hohle Behälter so geformt ist, dass er einen zylindrischen Körperteil hat, der Kuppelteile hat, die auf beiden Seiten desselben vorgesehen sind.

3. Verfahren zum Herstellen eines Druckbehälters nach einem der Ansprüche 1 bis 2, das das Beschichten der äußeren Oberfläche des hohlen Behälters mit einem Klebstoff vor dem Wickeln umfasst.

4. Verfahren zum Herstellen eines Druckbehälters nach Anspruch 3, wobei der Klebstoff ein Polyolefinharz ist, dem Maleinsäureanhydrid zugesetzt wurde.

5. Verfahren zum Herstellen eines Druckbehälters nach einem der Ansprüche 1 bis 4, wobei das Urethan(meth)acrylat-Harz (B) durch Umsetzen einer Isocyanat-Verbindung, die mindestens zwei Isocyanatgruppen in einem Molekül hat, mit einer (Meth)acrylat-Verbindung, die mindestens eine Hydroxylgruppe in einem Molekül hat, und einem Polyol, das aus der Gruppe ausgewählt wird, die aus Polyethylenglycolen, Polyäther-Polyolen und PolyesterPolyolen von Adipinsäure besteht und ein durchschnittliches Molekulargewicht von 2000 bis 8000 hat.

6. Verfahren zum Herstellen eines Druckbehälters nach einem der Ansprüche 1 bis 5, wobei das Fasermaterial eine Glasfaser ist.

7. Verfahren zum Herstellen eines Druckbehälters nach einem der Ansprüche 1 bis 6, wobei der hohle Behälter aus einem metallischen Auskleidungsmaterial oder einem thermoplastischen Harz-Auskleidungsmaterial gebildet ist.

8. Verfahren zum Herstellen eines Druckbehälters nach Anspruch 7, wobei der hohle Behälter aus einem thermoplastischen Auskleidungsmaterial gebildet ist und die äußere Oberfläche des hohlen Behälters einer Flammenbehandlung unterzogen wird.

9. Verfahren zum Herstellen eines Druckbehälters nach einem der Ansprüche 1 bis 8, das ferner das Beschichten der Oberfläche der gebildeten FPR-Schicht mit einem wetterbeständigen klaren Beschichtungsmaterial nach der Bestrahlung umfasst.

## Revendications

1. Procédé pour produire un récipient à pression, comprenant l'imprégnation d'un matériau fibreux avec une composition de résine photodurcissable comprenant une résine d'ester de vinyle (A), une résine de (méth)acrylate d'uréthane (B), et un photoamorceur (C), et l'enroulement du matériau fibreux autour de la surface extérieure d'un récipient creux, **caractérisé en ce que** le procédé comprend, après l'enroulement, l'irradiation d'une lumière ayant une longueur d'onde de 380 à 450 nm et ayant un pic de sensibilité à 405 nm pour un éclairement énergétique de 20 à 50 mW/cm², dans lequel l'éclairement énergétique signifie un éclairement énergétique dans la région de longueur d'onde de lumière irradiée mesurée par un photomètre IL-1400A fabriqué par International Light Corporation.

2. Procédé pour produire un récipient à pression selon la revendication 1, dans lequel le récipient creux est formé de façon à avoir une partie de corps cylindrique ayant des parties de dôme disposées sur les deux côtés de celle-ci.

3. Procédé pour produire un récipient à pression selon l'une quelconque des revendications 1 à 2, comprenant le revêtement de la surface extérieure du récipient creux avec un adhésif avant l'enroulement.

4. Procédé pour produire un récipient à pression selon la revendication 3, dans lequel l'adhésif est une résine de polyoléfine à laquelle de l'anhydride maléique a été ajouté.

5. Procédé pour produire un récipient à pression selon l'une quelconque des revendications 1 à 4, dans lequel la résine de (méth)acrylate d'uréthane (B) est obtenue par réaction d'un composé isocyanate ayant au moins deux groupes isocyanate par molécule avec un composé (méth)acrylate ayant au moins un groupe hydroxyle par molécule et un polyol choisi dans le groupe constitué par les polyéthylèneglycols, les polyétherpolyols, et les polyester-polyols d'acide adipique, et qui a une masse moléculaire moyenne de 2 000 à 8 000.

6. Procédé pour produire un récipient à pression selon l'une quelconque des revendications 1 à 5, dans lequel le matériau fibreux est constitué de fibres de verre.

7. Procédé pour produire un récipient à pression selon l'une quelconque des revendications 1 à 6, dans lequel le récipient creux est formé d'un matériau de revêtement métallique ou d'un matériau de revêtement en résine thermoplastique.

8. Procédé pour produire un récipient à pression selon la revendication 7, dans lequel le récipient creux est formé d'un matériau de revêtement thermoplastique et la surface extérieure du récipient creux est soumise à un traitement à la flamme.

9. Procédé pour produire un récipient à pression selon l'une quelconque des revendications 1 à 8, comprenant en outre le revêtement de la surface de la couche de FRP formée avec un matériau de revêtement translucide résistant aux intempéries après l'irradiation.
